# EUROPEAN PATENT SPECIFICATION

(11) **EP 2 977 935 B1**
(45) Date of publication and mention of the grant of the patent: **22.05.2019**
(21) Application number: 14769655.3
(22) Date of filing: 12.03.2014
(51) Int. Cl.: G06K 19/10, G06K 19/06, B42D 25/364, B42D 25/382, G06K 7/12, G06K 17/00, G02B 5/30, G02B 5/32, G06K 19/16, G07D 7/00, B42D 25/328, B41M 3/14

(54) **IDENTIFICATION MEDIUM, CODE INFORMATION READING METHOD, CODE INFORMATION READING DEVICE, IDENTIFICATION MEDIUM MANUFACTURING METHOD, AND IDENTIFICATION MEDIUM MANUFACTURING DEVICE**
IDENTIFIKATIONSMEDIUM, LESEVERFAHREN FÜR CODEINFORMATIONEN, LESEVORRICHTUNG FÜR CODEINFORMATIONEN, IDENTIFIKATIONSMEDIUMHERSTELLUNGSVERFAHREN UND IDENTIFIKATIONSMEDIUMHERSTELLUNGSVORRICHTUNG
SUPPORT D'IDENTIFICATION, PROCÉDÉ DE LECTURE D'INFORMATIONS DE CODE, DISPOSITIF DE LECTURE D'INFORMATIONS DE CODE, PROCÉDÉ DE FABRICATION DE SUPPORT D'IDENTIFICATION ET DISPOSITIF DE FABRICATION DE SUPPORT D'IDENTIFICATION

(30) Priority: 21.03.2013 JP 2013058716
(43) Date of publication of application: 27.01.2016
(73) Proprietor: NHK Spring Co., Ltd., Yokohama-shi, Kanagawa 236-0004 (JP)
(72) Inventor: HOSHINO, Hidekazu, Kanagawa 236-0004 (JP); TAKEUCHI, Itsuo, Kanagawa 236-0004 (JP); SHIBUYA, Seiya, Kanagawa 236-0004 (JP); IDA, Tohru, Kanagawa 236-0004 (JP)
(74) Representative: Eisenführ Speiser
(86) International application number: PCT/JP2014/056533
(87) International publication number: WO 2014/148338

(56) References cited:
- WO-A1-2012/128057
- DE-A1- 3 030 260
- JP-A- H05 278 380
- JP-A- 2006 293 729
- JP-A- 2012 022 381

## Description

### Technical Field

The present invention relates to an identification medium for determining whether or not foodstuffs, passports, documents, various cards, passes, bills, exchange tickets for money, bonds, security notes, gift certificates, pictures, tickets, public race betting tickets, recording media in which sound data and image data are recorded, recording media in which computer software is recorded, various parts, various products, garments and packages thereof are authentic.

### Background Art

Patent Publications 1 and 2 disclose a technique in which a code formed by infrared absorbing material is covered with infrared transmitting material and the code is read by irradiating infrared rays. In addition, Patent Publication 3 discloses a fluorescent printing covered with cholesteric liquid crystal.

Moreover, Patent Publication 4, forming the closest prior art, discloses a distinguishing medium with which it is possible to observe clear image switching with a structure which can be obtained inexpensively.

Additionally, Patent Publication 5 discloses an identification card having multiple layer, wherein a metallised inner layer is provided with burned out apertures for an infrared reading device.

Patent Publication 1 is Japanese Unexamined Patent Application Publication No. 2012-133743. Patent Publication 2 is Japanese Unexamined Patent Application Publication No. 2013-33447. Patent Publication 3 is Japanese Unexamined Patent Application Publication No. 2012-22381. Patent Publication 4 is PCT Patent Publication No. 2012/128057 whereas Patent Publication 5 is DE Patent Publication No. 30 30 260.

### DISCLOSURE OF THE INVENTION

### PROBLEMS SOLVED BY THE INVENTION

In the techniques in the Patent Publications 1 and 2, duplication (copying) cannot be carried out using general copying machines; however, reading and duplication can be carried out by irradiating a specific wavelength, when the principle is understood. In addition, the techniques cannot be visually distinguished and cannot determine whether or not code is authentic. Furthermore, designs thereof are inferior. In the technique in the Patent Publication 3, further improvement in cost, reliability and durability is required, since a fluorescence phenomenon is used. In view of such circumstances, an object of the present invention is to provide an identification medium that can determine whether or not a code is authentic when a structure displaying the code is visually observed, and which can also be superior in cost, reliability and durability.

### MEANS FOR SOLVING THE PROBLEMS

A first aspect of the present invention as defined in claim 1 has, amongst others, an identification medium having a structure including, in the following order as seen from the side of observation: a cholesteric liquid crystal layer which selectively reflects circularly polarized light of a first wavelength in a visible light band while transmitting infrared rays at a wavelength that is different from the first wavelength, and which has been subjected to hologram processing for forming a processed hologram on the cholesteric liquid crystal layer, and a code printed layer in which code information is printed by an ink that absorbs or reflects the infrared rays, in which a region which has been subjected to the hologram processing and a region in which the ink is printed on the code printed layer, are located so as to be at least partially overlapped when they are viewed from the side of observation.

According to the first aspect of the present invention, since visible light is partially reflected by the cholesteric liquid crystal layer, when the identification medium is visually observed, printed content (for example, a two-dimensional barcode display) of the code is interfered with by reflected light containing holographic images reflected by the cholesteric liquid crystal layer, and as a result, content of the code printed layer may not be recognized. Therefore, the printed content of the code printed layer cannot be read by general copying or imaging. Furthermore, some of the visible light is selectively reflected by the cholesteric liquid crystal layer, and infrared rays are transmitted through the cholesteric liquid crystal layer. Therefore, when infrared rays are irradiated thereon, the infrared rays are transmitted through the cholesteric liquid crystal layer, and the printed content of the code printed layer can be detected. Here, another layer may be provided between the cholesteric liquid crystal layer and the code printed layer, or it may not be provided.

A second aspect of the present invention has an identification medium according to the first aspect of the present invention, further comprising a masking layer between the cholesteric liquid crystal layer and the code printed layer, wherein the masking layer is made of material that absorbs visible light and which transmits infrared rays. According to the second aspect of the present invention, when the identification medium is visually observed, copied or imaged in a state in which visible light is irradiated thereon, the code printed layer cannot be observed, since the masking layer absorbs visible light. In addition, the masking layer functions as a back light absorbing layer of the cholesteric liquid crystal layer when the identification medium is visually observed, and therefore, reflected light reflected by the cholesteric liquid crystal layer can be selectively recognized and clear holographic images can be observed.

A third aspect of the present invention has an identification medium according to the first aspect or the second aspect of the present invention, in which ink for forming the code printed layer is made of material that is transparent to visible light but is not transparent to infrared rays. According to the third aspect of the present invention, when the identification medium is visually observed, copied or imaged in a state in which visible light is irradiated thereon, the effect in which the code printed layer is transparent and cannot be observed, is more remarkable.

A fourth aspect of the present invention has a method for reading code information contains an infrared ray irradiating step for irradiating infrared rays on the identification medium according to any one of the first aspect to the third aspect of the present invention, and a code information reading step for reading a code information based on reflected light of infrared rays reflected by the code printed layer.

A fifth aspect of the present invention has a code information reader that includes an infrared ray irradiating portion which is adapted to irradiate infrared rays on the identification medium according to any one of the first aspect to the third aspect of the present invention, and a code information reading portion which is adapted to read code information based on reflected light of infrared rays reflected by the code printed layer.

A sixth aspect of the present invention has a method for manufacturing the identification medium according to any one of the first aspect to the third aspect of the present invention, includes a printing step for printing the code printed layer on a substrate, and an adhering step for adhering the cholesteric liquid crystal layer on a surface of the substrate in which the code printing layer is printed.

A seventh aspect of the present invention has a device for manufacturing the identification medium according to any one of the first aspect to the third aspect of the present invention, contains a printing portion for printing the code printed layer on a substrate, and an adhering portion for adhering the cholesteric liquid crystal layer on a surface of the substrate in which the code printing layer is printed.

### EFFECTS OF THE INVENTION

According to the present invention, the identification medium can determine whether or not a code is authentic when a structure displaying the code is visually observed, and can also be superior in cost, reliability and durability.

### BRIEF DESCRIPTION OF DRAWINGS

Fig. 1 is a side cross sectional view showing an identification medium according to an embodiment of the present invention.
Fig. 2 is a side cross sectional view showing an identification medium according to an embodiment of the present invention.
Fig. 3 is a side cross sectional view showing an identification medium according to an embodiment of the present invention.
Fig. 4 is a block diagram of a code reader of an embodiment of the present invention.
Fig. 5 is a flowchart showing an example of a procedure in a code reading method.
Fig. 6A is a front view of an identification medium according to an embodiment of the present invention, and Figs. 6B and 6C are side cross sectional views.
Figs. 7A and 7B are a front view and a side view showing a state in which a paper label portion is adhered to a separator.
Figs. 8A and 8B are a front view and a side view showing a state in which a hologram portion is adhered to a separator.
Fig. 9 is a schematic view showing an example of an identification medium manufacturing device according to an embodiment of the present invention.

### EXPLANATION OF REFERENCE NUMERALS

100 denotes an identification medium, 101 denotes a substrate, 102 denotes a code printed layer, 103 denotes a cholesteric liquid crystal layer, 104 denotes a processed hologram, 105 denotes a protective layer, 121 denotes a masking layer, 131 denotes a code printed layer, 200 denotes an identification medium, 300 denotes an identification medium, 700 denotes an identification medium, 701 denotes a separator (a releasing paper), 702 denotes a two-dimensional code display, 703 denotes a hologram display, 703' denotes a processed hologram, 704 denotes another printed display, 711 denotes an adhesive layer, 712 denotes a base paper, 714 denotes an adhesive layer, 716 denotes a masking layer, 718 denotes a cholesteric liquid crystal layer, 719 denotes a transparent protective layer, 720 denotes a paper label portion, 721 denotes a roll, 730 denotes a hologram label portion, 731 denotes a separator, 732 denotes a roll, 750 denotes an identification label manufacturing device, 751 denotes a guide roll, 752 denotes a guide roll, 753 denotes a printing head, 754 denotes an adhering roller, 755 denotes a winding roll.

### MODE FOR CARRYING OUT THE INVENTION

### 1. First Embodiment

### Structure

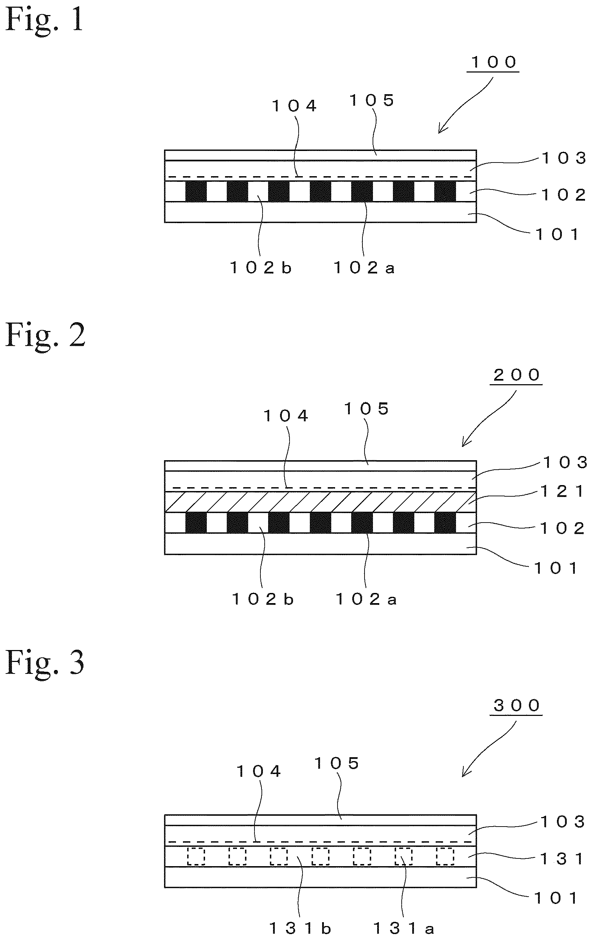

Fig. 1 shows an identification medium 100 of the present embodiment.
The identification medium 100 has a substrate 101. The substrate 101 has a thickness of 10 to 200 µm, and it is made of material in a film shape that reflects infrared rays. As a substrate 101, resin film or paper material that is bright, such as white, etc., can be used. A code printed layer 102 is provided on the substrate 101. The code printed layer 102 is a printed layer in which a barcode, a two-dimensional barcode, a character code, or another well-known code display is printed using ink that absorbs infrared rays. As ink which absorbs infrared rays, ink made of carbon, phthalocyanine, etc., can be used. The thickness of the code printed layer 102 may be freely selected as long as it does not interfere with the reading. Although infrared rays are selected depend on the material and light source to be used, for example, it can be selected within a range of 780 to 1,000 nm.

In Fig. 1, reference numeral 102a denotes a region in which the ink for forming the code printed layer 102 is carried, and reference numeral 102b denotes a region in which the ink is not carried. Here, the ink which forms the code printed layer 102 may have the characteristic that it reflects infrared rays. In this case, the substrate 101 made of material that absorbs infrared rays is used.

A cholesteric liquid crystal layer 103 is provided on the code printed layer. The cholesteric liquid crystal layer 103 has a thickness of about 1 to 10 µm, and it is set to selectively reflect circularly polarized light in a visible light band (for example, green, red, or an entire wavelength range of visible light) of rotated right or left. In the present invention, a direction of rotation of the circularly polarized light to be selectively reflected is not limited, and it may be rotated right or left.

A processed hologram 104 is formed on the cholesteric liquid crystal layer 103 by pressing an embossing die. The content of the holographic image observed due to the processed hologram 104 is not limited, but it is preferably a content that inhibits visual recognition of the code printed layer 102 when it is observed with the code printed layer 102. As a content of the holographic image observed due to the processed hologram 104, characters, various patterns, photographic images, images based on pictures, logos, combinations thereof, etc., can be used. In a lamination method (a direction of an optical axis of observation), a region which is subjected to the processed hologram 104 and a region 102a in which ink is printed on the code printed layer 102 is at least partially overlapped. When the holographic image due to the processed hologram 104 and display (for example, two-dimensional barcode display) of the code printed layer 103 are simultaneously observed, they are at least partially overlapped, and the visual recognition of the code printed layer 103 is inhibited by the hologram.

A protective layer 105 is provided on the cholesteric liquid crystal layer 103. The protective layer 105 transmits light for identification, and it is made of material that does not disturb a state of the polarized light of the transmitted light. As a material of the protective layer 105, resin material such as TAC film having a thickness of about 10 to 100 µm can be used.

### Functions

A surface of the identification medium 100 in which the protective layer 105 is provided is an observing surface. This is the same even in other embodiments. First, a case in which the identification medium 100 is visually observed or imaged in a state in which visible light is irradiated thereon, will be explained. In this case, the reflected light in the visible light band that forms the holographic image due to the processed hologram104 is selectively reflected by the cholesteric liquid crystal layer 103. As a result, the printed layer 102 cannot be accurately recognized by interference of the holographic image due to the reflected light reflected by the cholesteric liquid crystal layer 101, even if the code printed layer 102 is observed.

In the case in which the identification medium is observed using a circularly polarized filter in which right circularly polarized light is transmitted and a circularly polarized filter in which left circularly polarized light is transmitted, assuming that the cholesteric liquid crystal reflects red rotated right, the reflected light of the hologram is right circularly polarized light in the right circularly polarized filter, and therefore, the red holographic image can be recognized. In contrast, right circularly polarized light is cut off by the left circularly polarized filter, and therefore, the red holographic image cannot be visually recognized. The authenticity of the identification medium 100 can be judged by changing an image that can be visually recognized at this time.

Next, a case in which infrared rays are irradiated on the identification medium 100 will be explained. In this case, the infrared rays irradiated from the viewpoint of the protective layer 105 are transmitted through the cholesteric liquid crystal layer 103, and it reaches the code printed layer 102. This is due to the optical properties of the cholesteric liquid crystal. That is, the cholesteric liquid crystal selectively reflects circularly polarized light rotated right or rotated left at a specific center wavelength that depends on a pitch of liquid crystal material having a spiral structure. In this case, circularly polarized light, except for that at a specific wavelength, circularly polarized light of reverse rotation to reflected circularly polarized light, and linear polarized light is transmitted through the cholesteric liquid crystal. In the identification medium 100, the cholesteric liquid crystal layer 103 is set to have a property in which visible light is selectively reflected. Therefore, infrared rays are transmitted through the cholesteric liquid crystal layer 103 and reach the code printed layer 102.

The infrared rays that reach the code printed layer 102 is absorbed on a region on which the ink is printed, and it is reflected by a region in which the ink is not printed. The infrared rays reflected there are transmitted through the cholesteric liquid crystal layer 103 to a side of the protective layer 105, so as to trace a reverse path to the irradiating. Therefore, the code formed in the code printed layer 102 can be recognized by observing the infrared rays reflected from the identification medium 100. In this case, a code display of the code printed layer 102 can be read by, for example, using an optical reader that detects infrared rays. That is, in the case of this embodiment, irradiated light is superiorly reflected by the cholesteric liquid crystal layer 103 in an environment in which visible light is irradiated. In contrast, the cholesteric liquid crystal layer 103 is optically changed to be transparent by irradiating infrared rays, and therefore, the content of the code printed layer 102 can be observed.

### Advantages

In observing the hologram in an environment in which visible light is irradiated, the authenticity of the identification medium 100 can also be confirmed by refinement or tone of color of the hologram. When a composition or a manufacturing condition of the cholesteric liquid crystal, an embossing condition in the hologram processing, etc., is not known in detail, even if the cholesteric liquid crystal layer 103 is forged, it is technically difficult to imitate a liquid crystal pitch or a condition of the processed hologram 104, and it is difficult to manufacture an identification medium in which delicate tone of color or visibility of the hologram is the same. Therefore, authenticity of the identification medium 100 can be confirmed by visibility of the cholesteric liquid crystal layer 103, even if the code display of the code printing layer 102 is copied.

In addition, the cholesteric liquid crystal layer 102 shows a color shift in which observed color shifts to a short wavelength side as a viewing angle is gradually inclined from a perpendicular direction. The authenticity can also be confirmed by this color shift. Furthermore, according to the present invention, a hologram having superior design can be manufactured, since the hologram is superior in design. Additionally, the present invention has an advantage with respect to being low in cost, being reliable, and being durable, since it has a simple structure, and it is not made of material in which characteristics change over time, and it is not made of high cost material. The above advantage is also the same in the cases of the identification media 200 and 300.

Here, when material that cuts off visible light and transmits infrared rays is located instead of the cholesteric liquid crystal layer 103, authenticity cannot be confirmed by visually observing using a hologram, a color shift, or a circularly polarized filter. Therefore, authenticity of the read code cannot be determined. In addition, the high level of design, such as a hologram, cannot be obtained.

### 2. Second Embodiment

### Structure

Fig. 2 shows an identification medium 200 of the present embodiment. Here, in the following explanation, parts denoted by the same reference numerals as those in Fig. 1 are equivalent to parts explained in Fig. 1. In the identification medium 200, a masking layer 121 is added between the code printed layer 102 and the cholesteric liquid crystal layer 103 in the identification medium 100 shown in Fig. 1.

The masking layer 121 has a thickness of 1 to 10 µm, and it is made of material that transmits infrared rays and does not transmit visible light. That is, the masking layer 121 is made of material that transmits infrared rays and absorbs visible light. In this embodiment, when the masking layer 121 is visually observed, a clear holographic image is seen in a background of a dark color such as black, dark blue-black, etc., and when an infrared ray image is imaged in a state in which infrared rays are irradiated thereon, the infrared rays are transmitted through the masking layer 121. Therefore, the code printed layer 102 can be imaged. As material making up the masking layer 121, carbon-free pigments or carbon-free dyes can be used. Here, the masking layer 121 may exist over an entire surface, and it may be formed in a specific pattern.

### Functions

First, a case in which the identification medium 200 is visually observed or imaged in a state in which visible light is irradiated will be explained. In this case, only visible light reflected by the cholesteric liquid crystal layer 103 can be observed. This is a reason that the visible light which is transmitted through the cholesteric liquid crystal layer is absorbed by the masking layer 121. Therefore, a tendency in which the code printing layer 102 cannot be observed in a state in which visible light is irradiated is higher than that in the First Embodiment. In addition, since the masking layer 121 functions as a backlight absorbing layer, light reflected by the cholesteric liquid crystal layer 121 is preferentially observed, and a clear holographic image can be observed. When the masking layer 121 is not contained or when the masking layer 121 does not appear dark in color in a visible light band and has a reflective property, the reflected light from a back of the cholesteric liquid crystal layer 103 is also observed. As a result, visual sharpness of the reflected light (that is, a holographic image) of the cholesteric liquid crystal layer 121 is lower than that in the present embodiment.

Here, when the masking layer 121 has a specific pattern and has transparent portions, the code printed layer 102 is partially observed, but the advantage in which the code printed layer 102 is difficult to observe in a state in which visible light is irradiated, can be obtained.

Then, when it is observed in a state in which visible light is irradiated, infrared rays are transmitted through the cholesteric liquid crystal layer 103 and the masking layer 121, and a printed pattern of the code printed layer 102 absorbs the infrared rays, whereby the code printed layer 102 can be preferentially observed. Therefore, the code of the code printed layer 102 can be read using, for example, a reader for detecting infrared rays.

### Variations

The masking layer 121 may be formed to have a two-layer structure. In this case, the masking layer 121 is composed of a code display layer at a side of observation and a visible light reflecting layer at an adhered side. Here, in the code display layer, code display (for example, a two-dimensional barcode) printed by ink made of material that absorbs visible light and transmits infrared rays, is formed. The visible light reflecting layer is made of material that reflects a visible light band and transmits infrared rays. In this case, assuming that the cholesteric liquid crystal layer 103 reflects right circularly polarized light, the code of the code display layer in the masking layer 121 cannot be read by inhibition of the holographic image when it is directly observed in a state in which visible light is irradiated. Then, when it is observed through a left circularly polarized filter in an environment in which visible light is irradiated, the holographic image disappears and the code of the code display layer in the masking layer 121 can be read. Since the masking layer 121 having the above two-layer structure transmits infrared rays, the code of the code printed layer 102 can be read using infrared rays, in the same manner as in the case in which the masking layer 121 has a one-layer structure.

According to this aspect, a code of the masking layer 121 can be read by visible light, and a code of the code printed layer 102 can be read by infrared rays. Here, in the masking layer 121 having a two-layer structure, the code display layer may be printed by material that reflects visible light and transmits infrared rays, and a second layer (a back layer of the code printed layer) may be made of material that absorbs visible light and transmits infrared rays.

### 3. Third Embodiment

### Structure

Fig. 3 shows an identification medium 300 of the present embodiment. Here, in the following explanation, parts denoted by the same reference numerals as those in Fig. 1 are equivalent to parts explained in Fig. 1. In the identification medium 300, a code printed layer 131 is used instead of the code printed layer 102 in the identification medium 100 shown in Fig. 1.

The code printed layer 131 is printed by ink made of material that transmits visible light and absorbs (or reflects) infrared rays. Here, a printed pattern of the code printed layer 131 is the same as that of the code printed layer 102. In Fig. 3, reference numeral 131a denotes a region in which ink is carried, and reference numeral 131b denotes a region in which the ink is not carried.

In the identification medium 300, the masking layer 121 shown in Fig. 2 may be located between the code printed layer 131 and the cholesteric liquid crystal layer 103. When the masking layer 121 is located in the identification medium 300, the masking layer 121 functions as a back light absorbing layer of the cholesteric liquid crystal layer 103, and therefore, a clear holographic image can be observed.

### Functions

First, a case in which the identification medium 300 is visually observed or imaged in a state in which visible light is irradiated will be explained. In this case, only visible light reflected by the cholesteric liquid crystal layer 121 is observed. This is a reason that the code printed layer 131 cannot be observed, since visible light is transmitted through the cholesteric liquid crystal layer transmits an ink pattern of the code printed layer 131.

Then, when it is observed in a state in which infrared rays are irradiated, infrared rays are transmitted through the cholesteric liquid crystal layer 103 and a printed pattern of the code printed layer 131 absorbs (or reflects) infrared rays, and as a result, the code printed layer 102 can be preferentially observed. Therefore, the code of the code printed layer 131 can be read using, for example, a reader for detecting infrared rays.

### 4. Fourth Embodiment

### Structure

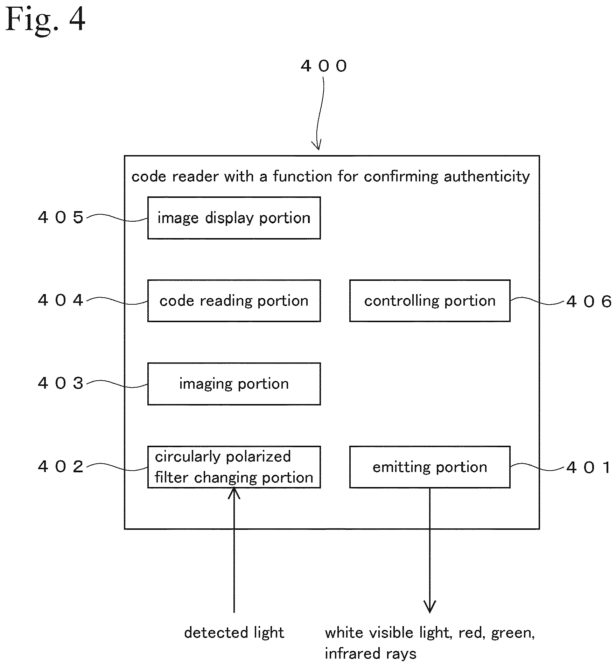

Fig. 4 shows a code reader with a function for confirming authenticity 400. The code reader with a function for confirming authenticity 400 has a function for confirming authenticity of the identification media 100 to 300 and a function for reading codes of the identification media 100 to 300.

The code reader with a function for confirming authenticity 400 includes a light emitting portion 401, a circularly polarized filter changing portion 402, an imaging portion 403, an image display portion 405, and a controlling portion 406. The light emitting portion 401 has a first light emitting portion that emits red light (visible light) and a second light emitting portion that emits infrared rays. Each light emitting portion has a light emitting element such as an LED, etc., which emits light at a corresponding wavelength and an optical system such as a lens, etc. In addition, it has an optical filter that limits a transmitted wavelength band located as necessary. Light selected from red light and infrared rays is irradiated from the light emitting portion 401 to the identification medium which is an object.

The circularly polarized filter changing portion 402 has a right circularly polarized filter that transmits selectively right circularly polarized light or a left circularly polarized filter which transmits selectively left circularly polarized light, and it can select a through mode or a mode which inserts the right circularly polarized filter or the left circularly polarized filter into an optical path.

The imaging portion 403 is formed by a CCD camera, etc., having sensitivity to the infrared, and it converts infrared rays detected through a circularly polarized filter changing portion 402 into image data. The code reading portion 404 is a code decoding portion, and it obtains information shown in a code display from image data of an infrared ray image imaged by the imaging portion 403. The image display portion 405 displays images imaged by the imaging portion 403, contents of codes decoded by the code reading portion 404, various information based on the contents of the codes (for example, display of whether ID is confirmed, etc.).

The controlling portion 406 is a computer that controls an operation of the code reader with a function for confirming authenticity 400, and it carries out a procedure of the following processing. The controlling portion 406 has a CPU, a memory, and various interfaces, and in the memory, programs for carrying out controlling operations are stored.

### Functions

One example of a case in which authenticity of the identification medium 200 is confirmed and code therein is read using the code reader with a function for confirming authenticity 400 will be explained. Here, one example of a case in which the cholesteric liquid crystal layer 103 reflects selectively red right circularly polarized light will be explained.

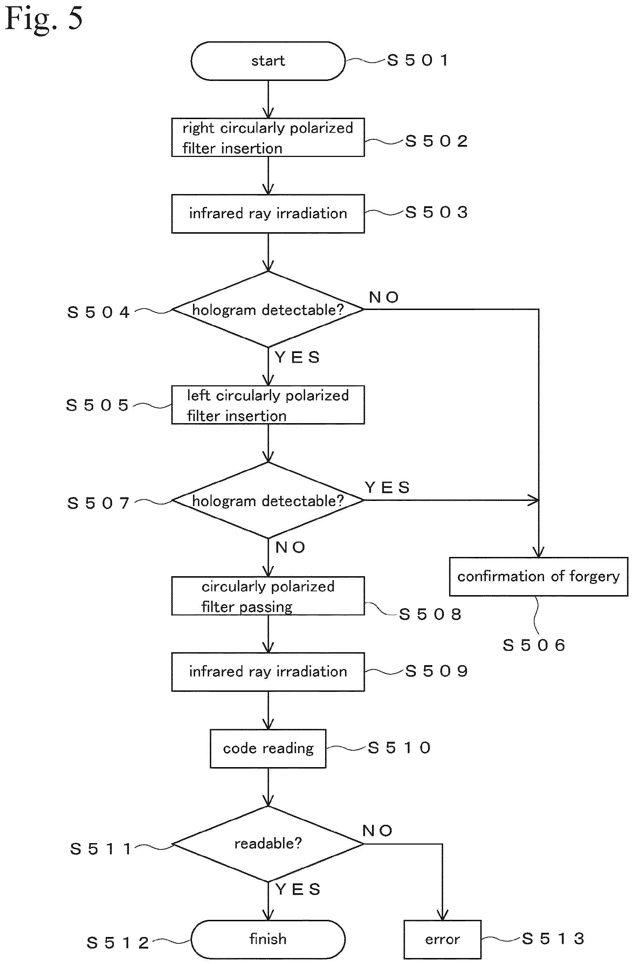

First, the example of a case in which the authenticity of the identification medium 200 is confirmed will be explained. Fig. 5 shows a flowchart of a processing procedure for confirming the authenticity. The program for carrying out the processing shown in Fig. 5 is stored in a memory of the controlling portion 406, is read on a suitable memory region, and is carried out by the controlling portion 406. The program for carrying out the processing shown in Fig. 5 may be saved in a suitable recording medium, and it may be carried out therefrom. Here, in the processing shown in Fig. 5, whether the hologram can be observed is detected by a person who observes the image display portion 405. Whether the hologram is observed can also be judged by software using image recognition technology.

The processing is started (Step S501), a right circularly polarized filter is inserted in an optical path of a circularly polarized filter changing portion 402 (Step S502), and then, red visible light is irradiated from a light emitting portion 401 to the identification medium 200 (Step S503). Here, when a hologram due to the processed hologram 104 in the identification medium 200 is observed, an operation proceeds from Step S504 to Step S505. In contrast, when the hologram is not observed, it is judged that the identification medium 200, which is the observed object, is a forgery (or there is some possibility that it is a forgery) (Step S506). In addition, in observing the hologram in Step S504, the authenticity of the hologram can also be confirmed by observing performance (refinement or tone of color) of the hologram. That is, in Step S504, when a predetermined holographic image is not observed, it is judged that a specific hologram is not observed and that the identification medium 200, which is an observed object, is a forgery (or there is some possibility that it is a forgery) (Step S506). Furthermore, in Step S504, code information may be formed by using the hologram to be the code that is read. When the code is read, it is judged that authenticity is confirmed, and the operation proceeds to Step S505. In contrast, when the code is not read, the operation proceeds to Step S506.

When it is not judged that the identification medium is a forgery in checking the authenticity, the operation proceeds to Step S505. In Step S505, a left circularly polarized filter is inserted in an optical path. After Step S505, the operation proceeds to Step S507, and whether the hologram can be observed is judged. Here, when the hologram can be observed, it is judged that the identification medium 200, which is an observed object, is a forgery (or there is some possibility that it is a forgery) (Step S506), since the right circularly polarized light reflected by the cholesteric liquid crystal layer 103 is not normally observed by the left circularly polarized filter. In contrast, when this hologram is not observed, the operation proceeds to Step S508.

In Step S508, the circularly polarized filter changing portion 402 is set to be a through mode (a state in which the right circularly polarized filter is removed from the optical path), and the operation proceeds to Step 509. In Step S509, light that is irradiated on the identification medium 200 is changed to infrared rays. Then, in a state in which infrared rays are irradiated, image data of an infrared ray image in which the identification medium 200 is imaged is read by the code reading portion 404, and code content (for example, data content of the two-dimensional barcode) of code printed layer 102 is read (Step S510).

Next, it is judged whether the code of the code printed layer 102 is read (Step S511), and when the code is read, the operation is finished (Step S512). In contrast, when the code is not read, an error processing is carried out (Step S513). Here, when the code is read, the read content or information in which the code could be read is displayed on the image display portion 405. In addition, when error processing is carried out, information in which the error occurred is displayed on the image display portion 405.

Here, an example of the case in which the cholesteric liquid crystal layer 103 selectively reflects the red right circularly polarized light was explained; however, the cholesteric liquid crystal layer 103 may reflect other colors of light. In this case, the color of light that is irradiated in Step S503 changes to a corresponding color. Furthermore, the cholesteric liquid crystal layer 103 may selectively reflect the left circularly polarized light. In this case, in Step S502, the left circularly polarized filter is inserted in the optical path, and in Step S505, the right circularly polarized filter is inserted in the optical path.

### Advantages

According to the present embodiment, the code can be read by confirming the authenticity using characteristics of the cholesteric liquid crystal.

### Variations

In the present embodiment, the observation by the circularly polarized filter may be pre-confirmed manually, and a device specialized for the code reading function may be used. Specifically, in the code reader with a function for confirming the authenticity 400 shown in Fig. 4, the circularly polarized filter changing portion 402 may be deleted, or the light emitting function of the visible light band in the light emitting portion 401 may be deleted.

### 5. Example

### Structure

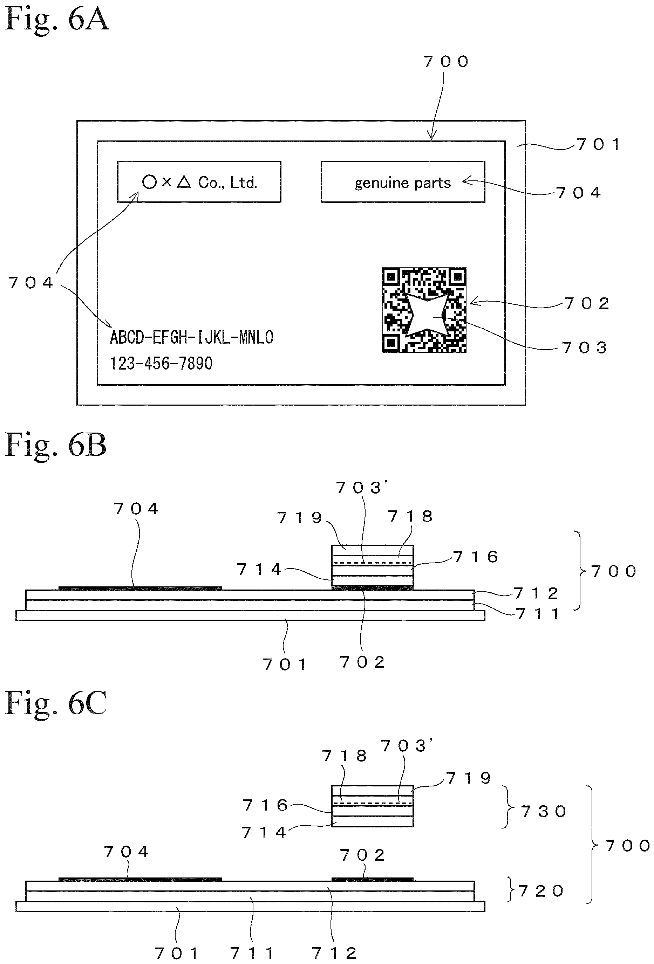

Fig. 6A is a front view showing an identification medium 700. Here, the identification medium 700 is adhered to a separator (a releasing paper) 701. The identification medium 700 is used by adhering to machine parts, electronic parts, other various products (or packages thereof), etc. The identification medium 700 has two-dimensional code display 702 and hologram display 703 formed so as to overlap with the two-dimensional code display 702. The two-dimensional code display 702 is for example, a two-dimensional barcode, and in the two-dimensional code display 702, various pieces of information with respect to an object to which the identification medium is adhered or information such as an internet address which can be used to obtain information about the object, is stored by encoding. In addition, the identification medium 700 has another printed display 704 in which, for example, trade name, manufacturer, lot number, or other information is printed.

Fig. 6B is a cross sectional view showing a state in which the separator 701 is adhered to the identification medium 700. In the following, a cross sectional structure of the identification medium 700 will be explained. In the identification medium 700, a substrate paper 712 is used as a substrate. An adhesive layer 711 made of adhesive material is provided at a lower side in the figure of the substrate paper 712. When the identification medium 700 is adhered to the object, the separator 701 is peeled from the adhesive layer 711, the exposed adhesive layer 711 is contacted with the object, and therefore, the identification medium 700 is fixed to the object.

An ink layer formed by printing which forms the two-dimensional code display 702 and the other printed display 704 is provided on the surface of the substrate paper 712 at which the adhesive layer 711 is not provided (an upper side in the figure). The two-dimensional code display 702 is formed using the same ink as in the code printed layer 102 shown in Figs. 1 to 3. In addition, the other printed display 704 is formed by commonly available ink. On the two-dimensional code display 702, a masking layer 716 made of the same material as in the masking layer 121 is placed using an adhesive layer 714.

A cholesteric liquid crystal layer 718, which is the same as the cholesteric liquid crystal layer 103, is provided on the masking layer 716. The cholesteric liquid crystal layer 718 is subjected to processed hologram 703' for forming the hologram display 703. The hologram display 703 is formed so as to overlap with the two-dimensional code display 702. Then, a transparent protective layer 719 made of TAC film, etc., is provided on the cholesteric liquid crystal layer 718.

### Manufacturing Method

As shown in Fig. 6C, the identification medium 700 adhered to the separator 701 is formed by a paper label portion 720 and a hologram label portion 730. Here, the paper label portion 720 is formed by the substrate paper 712 in which the two-dimensional code display 702 and the printed display 704 are provided on one surface thereof and the adhesive layer 711 is provided on the other surface thereof. The hologram label portion 730 is formed by the adhesive layer 714, the masking layer 716, the cholesteric liquid crystal layer 718, and the transparent protective layer 719. In this structure, the paper label portion 720 and the hologram label portion 730 are separately produced and are adhered by an adhesive function of the adhesive layer 714, and thereby, the identification medium 700 can be obtained.

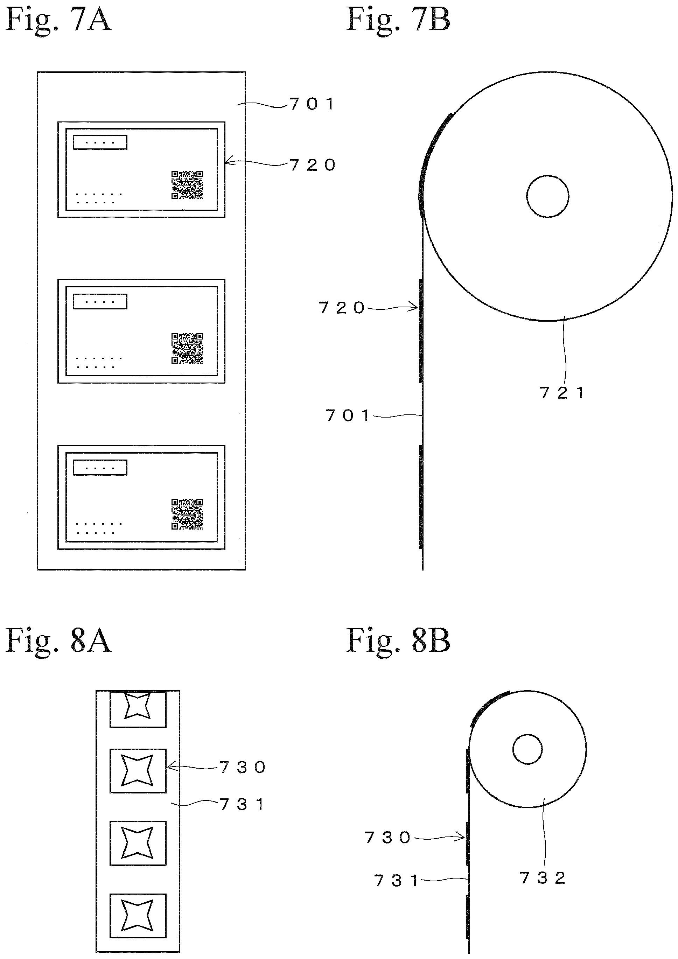

Fig. 7 shows some paper label portions 720 in a tape shape which are adhered to a separator 701 in a ribbon shape. Fig. 7A is a front view thereof, and Fig. 7B is a side view showing a state in which they are wound around a roll 721. Fig. 8 shows some hologram label portions 730 in a tape shape which are adhered to a separator 731 in a ribbon shape. Fig. 8A is a front view thereof, and Fig. 8B is a side view showing a state in which they are wound around a roll 732.

For example, the hologram label portion 730 is peeled from the separator 731, it is adhered to the two-dimensional code display 702 of the paper label portion 720 (see Fig. 6), and therefore, the identification medium 700 in a state adhered to the separator 701 shown in Fig. 6 is produced.

### Manufacturing Device

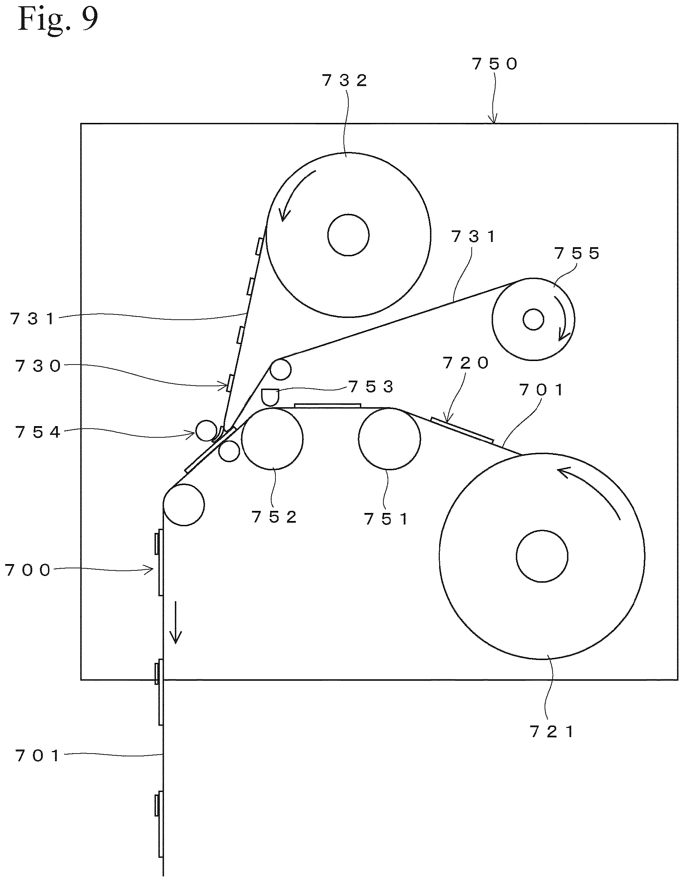

Fig. 9 shows an example of an identification label manufacturing device which manufactures an identification label having a structure in which the identification medium 700 is adhered to the separator 701 shown in Fig. 6. Fig. 9 shows an identification label manufacturing device 750. The identification label manufacturing device 750 has the roll 721 shown in Fig. 7. The separator 701, in which some paper label portions 720 (see Fig. 6C) are adhered, is wound around the roll 721. Here, the separator 701 has perforations, and according to this structure, it can be easily separated subsequently. The separator 701, in which the paper label portions 720 are adhered, is unwound from the roll 721, and it reaches a guide roll 752 via a guide roll 751. A printing head 753, which is a printing means, is located facing the guide roll 752, and the paper label portion 720 can be printed. Printable contents by the printing head 753 are part or all of the two-dimensional code display 702 and the other printed display 704 shown in Fig. 6. As a printing head 753, an ink jet type and a thermal transfer type can be used.

Alternatively, the identification label manufacturing device 750 has a roll 732 shown in Fig. 8. The separator 731 in a ribbon shape in which some hologram label portions 730 (see Fig. 6C) are adhered by adhesion of the adhesive layer 714 is wound around the roll 732. The separator 731 is unwound from the roll 732, so as to synchronize with the above unwinding of the separator 701 from the roll 721.

The separator 731 with the hologram label portion 730 unwound from the roll 732 is fed to an adhering roller 754 formed by a pair of faced rolls, and then, it contacts with a surface in which the two-dimensional code display 702 and the printed display 704 of the paper label portion 720 are formed. In this case, the adhesive layer 714 of the hologram label portion 730 contacts with the two-dimensional code display 702 of the paper label portion 720, as shown in Fig. 6C. Here, the hologram label portion 730 is reliably adhered to the paper label portion 720 by pressure applied from the adhering roller 754. The separator 731 shown in Fig. 9 is not shown in Fig. 6C. This adhering is carried out by an adhesive function of the adhesive layer 714. In this case, the adhesive function may be promoted by irradiating heat or ultraviolet light, depending on the material of the adhesive layer 714. The separator 731 in which the hologram label portion 730 is adhered to the paper label portion 720 is wound around a winding roll 755.

As described above, on the adhering roller 754, some identification media 700 shown in Fig. 6B can be fixed to the separator 701, and they are fed to the outside of the identification label manufacturing device 750. Here, perforations are formed on the separator 701, so as to separate individual identification media 700 on each separator 701, and the identification medium 700 in a label state which is adhered to the separator 701 can be obtained by simple operation.

According to the identification label 700 shown in Fig. 9, the paper label portion 720 is simultaneously printed by the printing head 735, and the hologram label portion 730 in which identification of the printed content is readable can be formed. This operation can be carried out in a manufacturing site or a distribution site of products to be identified (for example, a packaging site for shipping). For example, in facilities in which the products are shipped, information corresponding to each product with various specifications, customized for each customer, can be printed as the two-dimensional code display 702 by the printing head 753, and the hologram display 703 in which the identification is readable can be formed thereon.

### Variations

In the embodiment shown in Fig. 6, a two-dimensional code display is printed at a paper label portion 720 side; however, the two-dimensional code display may be printed at a hologram label portion 730 side. In this case, a two-dimensional code display denoted by a reference numeral 702 is provided between the masking layer 716 and the adhesive layer 714. When colors of the masking layer and the two-dimensional code display are similar, the two-dimensional code display denoted by a reference numeral 702 may be provided between the cholesteric liquid crystal layer 718 and the masking layer 716. Furthermore, when the two-dimensional code display is printed at the hologram label portion 730 side, an advantage in which it is not necessary to strictly position an adhered position of the hologram label portion 730 to the paper label portion 720, can be obtained.

The identification medium of the present invention can be used in techniques for confirming authenticity.

## Claims

1. An identification medium (100; 200; 300) having a structure comprising, in the following order, as seen from the side of observation:
a cholesteric liquid crystal layer (103) which selectively reflects circularly polarized light of a first wavelength in a visible light band while transmitting infrared rays at a wavelength that is different from the first wavelength, and which has been subjected to hologram processing for forming a processed hologram on the cholesteric liquid crystal layer (103), and
a code printed layer (102; 131),
wherein a region which has been subjected to the hologram processing and a region (102a; 131a) in which the ink is printed on the code printed layer (102; 131), are located so as to be at least partially overlapped when they are viewed from the side of observation,
**characterized in that** code information is printed in the code printed layer (102; 131) by an ink that absorbs or reflects the infrared rays.

2. The identification medium (200; 300) according to claim 1, further comprising a masking layer (121) between the cholesteric liquid crystal layer (103) and the code printed layer (102; 131), wherein the masking layer (121) is made of material which absorbs visible light and which transmits infrared rays.

3. The identification medium (100; 200; 300) according to claim 1 or 2, wherein ink for forming the code printed layer (102; 131) is made of material which is transparent to visible light but is not transparent to infrared rays.

4. A method for reading code information, comprising:
an infrared ray irradiating step for irradiating infrared rays on the identification medium (100; 200; 300) according to any one of claims 1 to 3, and
a code information reading step for reading a code information based on reflected light of infrared rays reflected by the code printed layer (102; 131).

5. A code information reader (400) comprising:
an infrared ray irradiating portion (401) which is adapted to irradiate infrared rays on the identification medium according to any one of claims 1 to 3, and
a code information reading portion (404) which is adapted to read code information based on reflected light of infrared rays reflected by the code printed layer (102; 131).

6. A method for manufacturing the identification medium (100; 200; 300) according to any one of claims 1 to 3, comprising:
a printing step for printing the code printed layer (102; 131) on a substrate (101), and
an adhering step for adhering the cholesteric liquid crystal layer (103) on a surface of the substrate (101) in which the code printing layer (102; 131) is printed.

7. A device (750) for manufacturing the identification medium (100; 200; 300); according to any one of claims 1 to 3, comprising:
a printing portion (753) for printing the code printed layer (102; 131) on a substrate (101), and
an adhering portion (754) for adhering the cholesteric liquid crystal layer (103) on a surface of the substrate (101) in which the code printing layer (102; 131) is printed.

## Patentansprüche

1. Identifikationsmedium (100; 200; 300) mit einem Aufbau, der, von der Beobachtungsseite aus gesehen, in der nachstehenden Reihenfolge Folgendes umfasst:
eine cholesterische Flüssigkristallschicht (103), die zirkular polarisiertes Licht mit einer ersten Wellenlänge in einem sichtbaren Lichtbereich selektiv reflektiert, während sie Infrarotstrahlen mit einer Wellenlänge, die anders als die erste Wellenlänge ist, durchlässt, und die Hologrammverarbeitung unterzogen wurde, um ein verarbeitetes Hologramm auf der cholesterischen Flüssigkristallschicht (103) auszubilden, und
eine Codedruckschicht (102; 131),
wobei ein Gebiet, das der Hologrammverarbeitung unterzogen wurde, und ein Gebiet (102a; 131a), in dem die Tinte auf die Codedruckschicht (102; 131) gedruckt ist, derart angeordnet sind, dass sie sich von der Beobachtungsseite aus gesehen zumindest teilweise überlappen,
**dadurch gekennzeichnet, dass** die Codeinformationen mit einer Tinte in die Codedruckschicht (102; 131) gedruckt sind, welche die Infrarotstrahlen absorbiert oder reflektiert.

2. Identifikationsmedium (200; 300) nach Anspruch 1, ferner umfassend eine Maskierungsschicht (121) zwischen der cholesterischen Flüssigkristallschicht (103) und der Codedruckschicht (102; 131), wobei die Maskierungsschicht (121) aus einem Material besteht, das sichtbares Licht absorbiert und Infrarotstrahlen durchlässt.

3. Identifikationsmedium (100; 200; 300) nach Anspruch 1 oder 2, wobei die Tinte zum Ausbilden der Codedruckschicht (102; 131) aus einem Material besteht, das durchlässig für sichtbares Licht ist, aber nicht durchlässig für Infrarotstrahlen ist.

4. Verfahren zum Lesen von Codeinformationen, umfassend:
einen Infrarotstrahl-Abstrahlungsschritt zum Abstrahlen von Infrarotstrahlen auf das Identifikationsmedium (100; 200; 300) nach einem der Ansprüche 1 bis 3, und
einen Codeinformationen-Leseschritt zum Lesen von Codeinformationen auf der Grundlage von reflektiertem Licht von Infrarotstrahlen, die von der Codedruckschicht (102; 131) reflektiert werden.

5. Codeinformationen-Lesegerät (400), umfassend:
einen Infrarotstrahl-Abstrahlabschnitt (401), der eingerichtet ist, um Infrarotstrahlen auf das Identifikationsmedium nach einem der Ansprüche 1 bis 3 abzustrahlen, und
einen Codeinformationen-Leseabschnitt (404), der eingerichtet ist, um Codeinformationen auf der Grundlage von reflektiertem Licht von Infrarotstrahlen zu lesen, die von der Codedruckschicht (102; 131) reflektiert werden.

6. Verfahren zur Herstellung des Identifikationsmediums (100; 200; 300) nach einem der Ansprüche 1 bis 3, umfassend:
einen Druckschritt zum Drucken der Codedruckschicht (102; 131) auf ein Substrat (101), und
einen Klebeschritt zum Kleben der cholesterischen Flüssigkristallschicht (103) auf eine Oberfläche des Substrats (101), in die die Codedruckschicht (102; 131) gedruckt ist.

7. Vorrichtung (750) zur Herstellung des Identifikationsmediums (100; 200; 300) nach einem der Ansprüche 1 bis 3, umfassend:
einen Druckabschnitt (753) zum Drucken der Codedruckschicht (102; 131) auf ein Substrat (101), und
einen Klebeabschnitt (754) zum Kleben der cholesterischen Flüssigkristallschicht (103) auf eine Oberfläche des Substrats (101), in die die Codedruckschicht (102; 131) gedruckt ist.

## Revendications

1. Support d'identification (100 ; 200 ; 300) ayant une structure comprenant, dans l'ordre suivant, vu depuis le côté d'observation :
une couche de cristaux liquides cholestériques (103) qui réfléchit sélectivement une lumière à polarisation circulaire d'une première longueur d'onde dans une bande de lumière visible tout en transmettant des rayons infrarouges à une longueur d'onde qui est différente de la première longueur d'onde et qui a été soumise à un traitement d'hologramme pour former un hologramme traité sur la couche de cristaux liquides cholestériques (103) et
une couche imprimée de code (102 ; 131),
dans lequel une région qui a été soumise au traitement d'hologramme et une région (102a ; 131a) dans laquelle l'encre est imprimée sur la couche imprimée de code (102 ; 131), sont situées de manière à se chevaucher au moins partiellement lorsqu'elles sont visualisées depuis le côté d'observation,
**caractérisé en ce que** des informations de code sont imprimées dans la couche imprimée de code (102 ; 131) par une encre qui absorbe ou réfléchit les rayons infrarouges.

2. Support d'identification (200 ; 300) selon la revendication 1, comprenant en outre une couche de masquage (121) entre la couche de cristaux liquides cholestériques (103) et la couche imprimée de code (102 ; 131), la couche de masquage (121) étant constituée d'un matériau qui absorbe la lumière visible et qui transmet les rayons infrarouges.

3. Support d'identification (100 ; 200 ; 300) selon la revendication 1 ou 2, dans lequel l'encre pour former la couche imprimée de code (102 ; 131) est constituée d'un matériau qui est transparent à la lumière visible mais n'est pas transparent aux rayons infrarouges.

4. Procédé de lecture d'informations de code, comprenant ;
une étape d'irradiation de rayons infrarouges pour irradier des rayons infrarouges sur le support d'identification (100 ; 200 ; 300) selon l'une quelconque des revendications 1 à 3, et
une étape de lecture d'informations de code pour lire des informations de code sur la base de la lumière réfléchie de rayons infrarouges réfléchis par la couche imprimée de code (102 ; 131).

5. Lecteur d'informations de code (400) comprenant ;
une partie d'irradiation de rayons infrarouges (401) qui est conçue pour irradier des rayons infrarouges sur le support d'identification selon l'une quelconque des revendications 1 à 3 et
une partie de lecture d'informations de code (404) qui est conçue pour lire des informations de code sur la base de la lumière réfléchie de rayons infrarouges réfléchis par la couche imprimée de code (102 ; 131).

6. Procédé de fabrication du support d'identification (100 ; 200 ; 300) selon l'une quelconque des revendications 1 à 3, comprenant :
une étape d'impression pour imprimer la couche imprimée de code (102 ; 131) sur un substrat (101) et
une étape d'adhérence pour faire adhérer la couche de cristaux liquides cholestériques (103) sur une surface du substrat (101) dans lequel est imprimée la couche d'impression de code (102 ; 131).

7. Dispositif (750) pour fabriquer le support d'identification (100 ; 200 ; 300) selon l'une quelconque des revendications 1 à 3, comprenant ;
une partie d'impression (753) destinée à imprimer la couche imprimée de code (102 ; 131) sur un substrat (101), et
une partie d'adhérence (754) destinée à faire adhérer la couche de cristaux liquides cholestériques (103) sur une surface du substrat (101) dans lequel est imprimée la couche d'impression de code (102 ; 131).
